# EUROPEAN PATENT APPLICATION

(11) **EP 3 883 239 A1**
(43) Date of publication of application: **22.09.2021**
(21) Application number: 21166850.4
(22) Date of filing: 06.07.2016
(51) Int. Cl.: H04N 7/14

(54) **METHOD AND APPARATUS FOR QUERYING INFORMATION**

(30) Priority: 07.07.2015 CN 201510395465
(62) Divisional of application: 16178212.3
(71) Applicant: Xiaomi Inc., Haidian District, Beijing 100085 (CN)
(72) Inventor: LI, Feiyun, BEIJING, 100085 (CN); CHEN, Changbing, BEIJING, 100085 (CN); HOU, Enxing, BEIJING, 100085 (CN)
(74) Representative: Cabinet Beau de Loménie

(57) **Abstract**

A method for querying information includes: a video capture device acquires (S71) a communication request sent from a terminal; extracts (S72) a terminal identifier from the communication request; determines (S73) a number of terminals currently connected to the video capture device according to the terminal identifier; transmits (S74) status information of the video capture device to the network device; and the network device receives (S75) the status information; extracts (S76) the number of terminals currently connected to the video capture device; receives (S77) a query request sent from a predetermined terminal if the number of terminals currently connected to the video capture device exceeds a first preset threshold; queries (S78) the status information of the video capture device associated with the predetermined terminal according to the query request; and transmits (S79) the status information to the predetermined terminal.

## Description

### TECHNICAL FIELD

The present disclosure generally relates to the technical field of communications, and more particularly, to a method and an apparatus for querying information.

### BACKGROUND

As a kind of devices for video capture, cameras are widely used in various applications such as video conference, distance education, telemedicine, real-time monitor and the like. The cameras can be used for capturing video image signal in applications of video conference, distance education and telemedicine, enabling users to experience as if they were on site. Moreover, precautions and security could be improved when the cameras are applied to real-time monitoring.

### SUMMARY

Embodiments of the present disclosure provide a method and an apparatus for querying information including following technical solutions.

According to a first aspect of embodiments of the present disclosure, there is provided a method for querying information. The method may be applicable in a video capture device and include:
acquiring a communication request sent from a terminal;
detecting, based on the communication request, terminals connected to the video capture device; and
transmitting status information of the video capture device to a network device, the status information including information related to the terminals connected to the video capture device.

Following advantageous effects may be achieved by the technical solution provided in the embodiment according to the present disclosure. Since terminals connected to the video capture device are detected and status information of the video capture device is transmitted to the network device, the network device may be enabled to acquire information related to those terminals connected to the video capture device during communication, thus communication security can be ensured.

In an embodiment, the detecting terminals connected to the video capture device according to the communication request includes:
extracting a terminal identifier from the communication request; and
determining at least one connection status parameter of the video capture device selected from a group including:
   a number of terminals currently connected to the video capture device, and a number of terminals connected to the video capture device during a preset time interval.

Following advantageous effects may be achieved by the technical solution provided in the embodiment according to the present disclosure. The number of terminals connected to the video capture device according to the terminal device may be determined according to the terminal identifier, thus an illegal third party may be prevented from accessing the device, and communication security can be further improved.

In an embodiment, the information related to the terminals connected to the video capture device includes at least one selected from a group including:
terminal identifiers of the terminals, and the connection status parameter of the video capture device.

Following advantageous effects may be achieved by the technical solution provided in the embodiment according to the present disclosure. A diversity of information related to terminals connected to the video capture device can be achieved by customizing different types of information related to terminals.

In an embodiment, the transmitting status information of the video capture device to a network device includes:
transmitting the status information of the video capture device to the network device periodically;
or
transmitting the status information of the video capture device to the network device if the connection status parameter exceeds a first preset threshold.

Following advantageous effects may be achieved by the technical solution provided in the embodiment according to the present disclosure. A diversity of manners for transmitting the status information of the video capture device can be achieved by providing different manners for transmitting the status information of the video capture device.

In an embodiment, the transmitting status information of the video capture device to a network device includes:
generating a heartbeat packet of the video capture device according to the status information; and
transmitting the heartbeat packet to the network device.

Following advantageous effects may be achieved by the technical solution provided in the embodiment according to the present disclosure. The status information of the video capture device may be received by the network device periodically by providing a heartbeat mechanism, so as to ensure validity of the connection between the network device and the video capture device.

According to a second aspect of embodiments of the present disclosure, there is provided a method for querying information. The method may be applicable in a network device, such as a router, and include:
receiving status information sent from a video capture device, the status information including information related to terminals connected to the video capture device; and
transmitting the status information to a predetermined terminal, wherein the predetermined terminal is a terminal associated with the video capture device.

Following advantageous effects may be achieved by the technical solution provided in the embodiment according to the present disclosure. The status information of the video capture device is received and then transmitted to the predetermined terminal associated with the video capture device, thus the predetermined terminal associated is enabled to acquire the status information of the video capture device.

In an embodiment, the transmitting the status information to a predetermined terminal includes:
extracting a connection status parameter of the video capture device from the status information; and
transmitting the status information to the predetermined terminal if the connection status parameter exceeds a second preset threshold.

Following advantageous effects may be achieved by the technical solution provided in the embodiment according to the present disclosure. The status information may be acquired by the predetermined terminal if the connection status parameter of the video capture device exceeds the second preset threshold.

In an embodiment, the transmitting the status information to a predetermined terminal includes:
receiving a query request sent from the predetermined terminal;
querying status information of a video capture device associated with the predetermined terminal according to the query request; and
transmitting the status information to the predetermined terminal.

Following advantageous effects may be achieved by the technical solution provided in the embodiment according to the present disclosure. Status information of the video capture device associated with the predetermined terminal may be queried and transmitted to the predetermined terminal according to the query request sent from the predetermined terminal, thus the predetermined terminal is enabled to acquire the status information of the video capture device associated with it.

In an embodiment, the transmitting the status information to a predetermined terminal includes:
transmitting the status information to the predetermined terminal periodically.

Following advantageous effects may be achieved by the technical solution provided in the embodiment according to the present disclosure. The status information may be transmitted to the predetermined terminal periodically, thus the status information can be pushed actively so as to further intelligentize transmission of the status information.

According to a third aspect of embodiments of the present disclosure, there is provided an apparatus for querying information. The apparatus may be applicable in a video capture device and include:
an acquisition module configured to acquire a communication request sent from a terminal;
a detection module configured to detect, based on the communication request, terminals connected to the video capture device; and
a transmission module configured to transmit status information of the video capture device to a network device, the status information including information related to the terminals connected to the video capture device.

In an embodiment, the detection module includes:
an extraction submodule configured to extract a terminal identifier from the communication request; and
a determination submodule configured to determine at least one connection status parameter of the video capture device selected from a group including:
   number of terminals currently connected to the video capture device, and number of terminals connected to the video capture device during a preset time interval.

In an embodiment, the transmission module is configured to transmit the status information of the video capture device to the network device periodically;
or
configured to transmit the status information of the video capture device to the network device if the connection status parameter exceeds a first preset threshold.

In an embodiment, the transmission module includes:
a generation submodule configured to generate a heartbeat packet of the video capture device according to the status information; and
a transmission submodule configured to transmit the heartbeat packet to the network device.

According to a fourth aspect of embodiments of the present disclosure, there is provided an apparatus for querying information. The apparatus may be applicable at a network device and include:
a reception module configured to receive status information sent from a video capture device, the status information including information related to terminals connected to the video capture device; and
a transmission module configured to transmit the status information to a predetermined terminal, wherein the predetermined terminal is a terminal associated with the video capture device.

In an embodiment, the transmission module includes:
an extraction submodule configured to extract a connection status parameter of the video capture device from the status information; and
a first transmission submodule configured to transmit the status information to the predetermined terminal if the connection status parameter exceeds a second preset threshold.

In an embodiment, the transmission module includes:
a reception submodule configured to receive a query request sent from the predetermined terminal;
a query submodule configured to query status information of a video capture device associated with the predetermined terminal according to the query request; and
a second transmission submodule configured to transmit the status information to the predetermined terminal.

In an embodiment, the transmission module is configured to transmit the status information to the predetermined terminal periodically.

According to a fifth aspect of embodiments of the present disclosure, there is provided an apparatus for querying information, including:
a processor; and
a memory for storing instructions executable by the processor,
wherein the processor is configured to:
   acquire a communication request sent from a terminal;
   detect terminals connected to the video capture device according to the communication request; and
   transmit status information of the video capture device to a network device, the status information including information related to the terminals connected to the video capture device.

According to a sixth aspect of embodiments of the present disclosure, there is provided an apparatus for querying information, including:
a processor; and
a memory for storing instructions executable by the processor,
wherein the processor is configured to:
   receive status information sent from a video capture device, the status information including information related to terminals connected to the video capture device; and
   transmit the status information to a predetermined terminal, wherein the predetermined terminal is a terminal associated with the video capture device.

According to a seventh aspect of embodiments of the present disclosure, there is provided a computer program which, when being executed on a processor of a video capture device, performs the method according to the first aspect described above; or when being executed on a processor at a network device, performs the method according to the second aspect described above.

In other words, the steps of the methods as defined above are determined by computer program instructions.

Consequently, according to a seventh aspect, the invention is also directed to a computer program for executing the steps of a method for querying information as defined above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as defined above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow chart illustrating a method for querying information according to an exemplary embodiment.
Fig. 2 is a flow chart illustrating a method for querying information according to an exemplary embodiment.
Fig. 3 is a flow chart illustrating a method for querying information according to an exemplary embodiment.
Fig. 4 is a flow chart illustrating a method for querying information according to an exemplary embodiment.
Fig. 5 is a flow chart illustrating a method for querying information according to an exemplary embodiment.
Fig. 6 is a flow chart illustrating a method for querying information according to an exemplary embodiment.
Fig. 7 is a flow chart illustrating a method for querying information according to an exemplary embodiment.
Fig. 8 is a block diagram illustrating an apparatus for querying information according to an exemplary embodiment.
Fig. 9 is a block diagram illustrating an apparatus for querying information according to an exemplary embodiment.
Fig. 10 is a block diagram illustrating an apparatus for querying information according to an exemplary embodiment.
Fig. 11 is a block diagram illustrating an apparatus for querying information according to an exemplary embodiment.
Fig. 12 is a block diagram illustrating an apparatus for querying information according to an exemplary embodiment.
Fig. 13 is a block diagram illustrating an apparatus for querying information according to an exemplary embodiment.
Fig. 14 is a block diagram illustrating an apparatus used for querying information according to an exemplary embodiment.
Fig. 15 is a block diagram illustrating an apparatus used for querying information according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

Embodiments of the present disclosure provide a method for querying information, which can be implemented by a video capture device and a network device. The video capture device may be a camera connected to Internet, which can be used for real-time communication or real-time monitor. When being used for real-time communication, the video capture device may be an external camera or a build-in camera of the terminal. For different subjects implementing the method according to embodiments of the present disclosure, there are provided two sets of methods for querying information as follows.

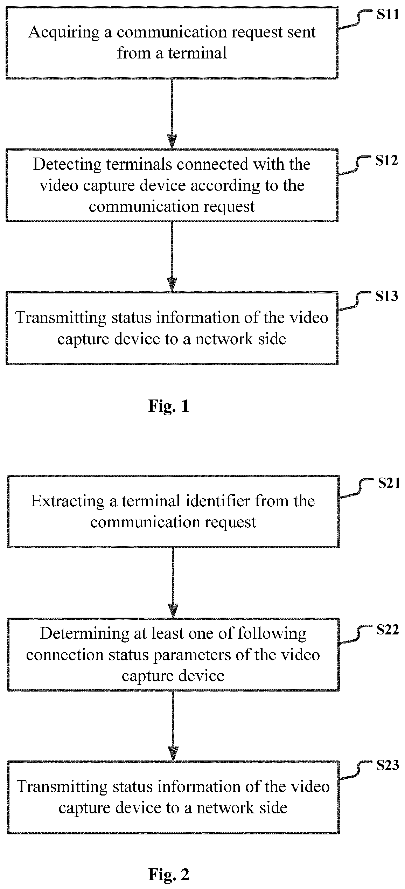

Fig. 1 is a flow chart illustrating a method for querying information according to an exemplary embodiment. As shown in Fig. 1, the method for querying information may be applied in a video capture device, and includes following steps S11-S13.

In step S11, acquiring a communication request sent from a terminal;
In step S12, detecting, based on the communication request, terminals connected to the video capture device; and
In step S13, transmitting status information of the video capture device to a network device, the status information including information related to the terminals connected to the video capture device.

In the present disclosure, a network device (or network terminal) is a device located in a network. Such a network device may be a server or a router (or "smart router" as discussed further below). The video capture device is capable of communicating with said network device.

A camera (or "smart camera") connected to Internet is taken as an example of the video capture device. When the camera receives a communication request from the terminal, it may detect a plurality of terminals connected to the camera and transmit information related to the terminals connected to the video capture device to a network device. Herein, the communication request may be a request instructing the camera to share scenes shoot by the camera.

Following advantageous effects may be achieved by the technical solution provided in the embodiment according to the present disclosure. Since terminals connected to the video capture device are detected and status information of the video capture device is transmitted to the network device, the network device may be enabled to acquire information related to those terminals connected to the video capture device during communication, thus communication security can be ensured.

In an embodiment, as shown in Fig. 2, the detecting step S12 described above may be implemented in following steps S21-S23.

In step S21, extracting a terminal identifier from the communication request; and
In step S22, determining at least one connection status parameter of the video capture device selected from a group including:
a number of terminals currently connected to the video capture device, and a number of terminals connected to the video capture device during a preset time interval.

In step S23, transmitting status information of the video capture device to a network device.

For example, when the communication request is sent by the terminal, it may carry the terminal identifier of the terminal therein. After receiving the communication request, the camera may extract the terminal identifier from the communication request and determine connection status parameters of the camera according to the terminal identifier. The parameters may include the number of terminals currently connected to the camera, or the number of terminals connected to the camera during a preset time interval.

Following advantageous effects may be achieved by the technical solution provided in the embodiment according to the present disclosure. The number of terminals connected to the video capture device according to the terminal device may be determined according to the terminal identifier, thus an illegal third party may be prevented from accessing the device, and communication security can be further improved.

In an embodiment, the information related to the terminals connected to the video capture device in above described step S13 may include at least one selected from a group including:
terminal identifiers of the terminals, and the connection status parameter of the video capture device.

Following advantageous effects may be achieved by the technical solution provided in the embodiment according to the present disclosure. A diversity of about terminals connected to the video capture device can be achieved by customizing different types of information related to terminals.

In an embodiment, the step S13 described above of transmitting status information of the video capture device to a network device may include:
transmitting the status information of the video capture device to the network device periodically;
or
transmitting the status information of the video capture device to the network device if the connection status parameter exceeds a first preset threshold.

For example, the transmitting status information of a camera to a network device may include transmitting the status information of the camera to the network device periodically, or transmitting the status information to the network device if the number of terminals connected to the camera exceeds a preset threshold.

Following advantageous effects may be achieved by the technical solution provided in the embodiment according to the present disclosure. A diversity of manners for transmitting the status information of the video capture device can be achieved by providing different manners for transmitting the status information of the video capture device.

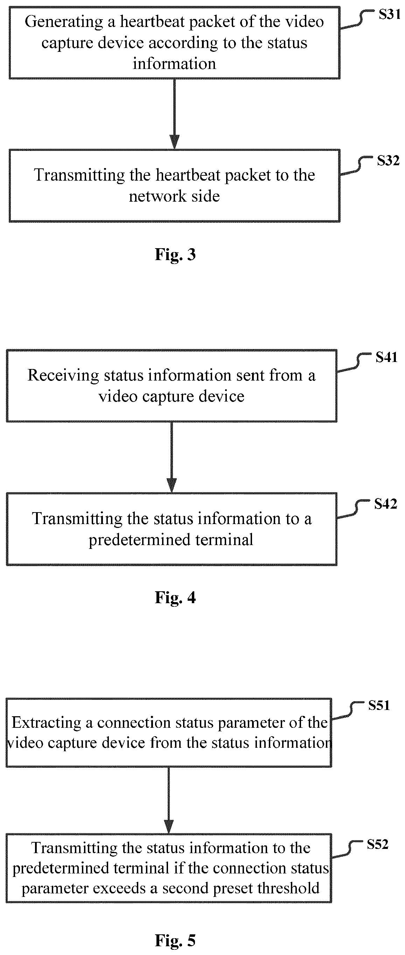

In an embodiment, as shown Fig.3, the step S13 described above of transmitting status information of the video capture device to a network device may include following steps S31-S32.

In step S31, generating a heartbeat packet of the video capture device according to the status information.

In step S32, transmitting the heartbeat packet to the network device.

The heartbeat packet refers to status information of a camera transmitted to the network device every once in a time interval by the camera. Furthermore, the step of transmitting status information of the camera to the network device may be implemented by generating a heartbeat packet of the camera according to the status information and transmitting the heartbeat packet to the network device.

Following advantageous effects may be achieved by the technical solution provided in the embodiment according to the present disclosure. The status information of the video capture device may be received by the network device periodically by providing a heartbeat mechanism, so as to ensure validity of the connection between the network device and the video capture device.

Fig. 4 is a flow chart illustrating a method for querying information according to an exemplary embodiment. As shown in Fig. 4, the method for querying information may be applied at a network device, and includes following steps S41-S42.

In step S41, receiving status information sent from a video capture device, the status information including information related to terminals connected to the video capture device.

In step S42, transmitting the status information to a predetermined terminal, wherein the predetermined terminal is a terminal associated with the video capture device.

Following advantageous effects may be achieved by the technical solution provided in the embodiment according to the present disclosure. The status information of the video capture device is received and then transmitted to the predetermined terminal associated with the video capture device, thus the predetermined terminal associated is enabled to acquire the status information of the video capture device.

In an embodiment, as shown in Fig. 5, the above described step S42 of transmitting the status information to a predetermined terminal may include following steps S51-S52.

In step S51, extracting a connection status parameter of the video capture device from the status information.

In step S52, transmitting the status information to the predetermined terminal if the connection status parameter exceeds a second preset threshold.

A router, called "smart router", may be taken as an example of the network device. The smart router may receive status information sent from a camera, and extract a connection status parameter of the camera from the status information. If the connection status parameter exceeds a preset threshold, the status information is transmitted to a terminal associated with the camera.

The connection status parameter may include the number of terminals connected to the camera. Moreover, the terminal associated with the camera may be a terminal authorized in advance to check the status information of the camera.

Following advantageous effects may be achieved by the technical solution provided in the embodiment according to the present disclosure. The status information may be acquired by the predetermined terminal if the connection status parameter of the video capture device exceeds the second preset threshold.

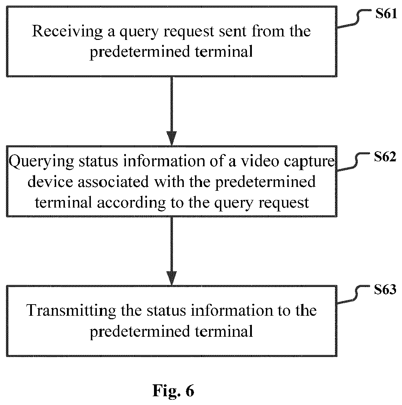

In an embodiment, as shown in Fig. 6, the above described step S42 of transmitting the status information to a predetermined terminal may also include following steps S61-S63.

In step S61, receiving a query request sent from the predetermined terminal.

In step S62, querying status information of a video capture device associated with the predetermined terminal according to the query request.

In step S63, transmitting the status information to the predetermined terminal.

For example, the smart router may receive a query request sent from the terminal and used for querying status information of a camera associated with the terminal. Accordingly, the smart router queries the status information of the camera associated with the terminal based on the query request and transmits the status information to the terminal which sends the query request.

Following advantageous effects may be achieved by the technical solution provided in the embodiment according to the present disclosure. Status information of the video capture device associated with the predetermined terminal may be queried and transmitted to the predetermined terminal according to the query request sent from the predetermined terminal, thus the predetermined terminal is enabled to acquire the status information of the video capture device associated with it.

In an embodiment, the step of transmitting the status information to the predetermined terminal may include:
transmitting the status information to the predetermined terminal periodically.

Following advantageous effects may be achieved by the technical solution provided in the embodiment according to the present disclosure. The status information may be transmitted to the predetermined terminal periodically, thus the status information can be pushed actively so as to further intelligentize transmission of the status information.

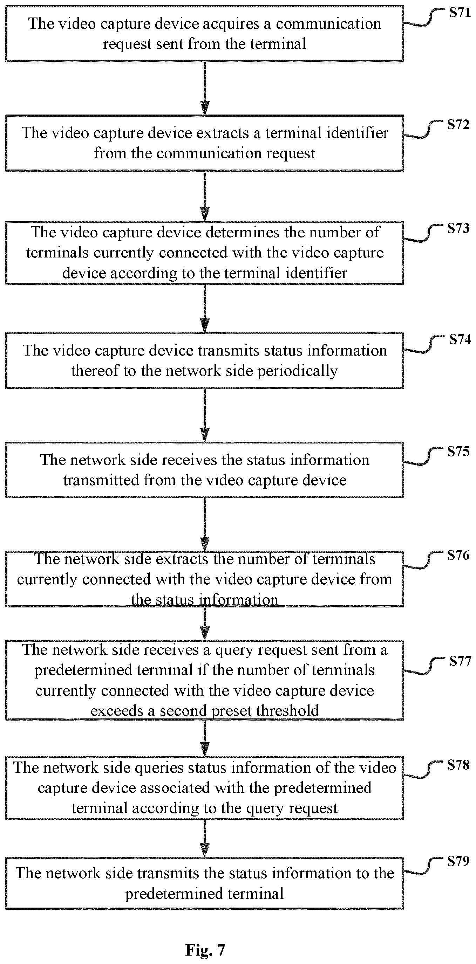

Fig. 7 is a flow chart illustrating a method for querying information according to an exemplary embodiment. As shown in Fig. 7, the method for querying information may be applied in an interactive system including a video capture device and a network device, and includes following steps S71-S79.

In step S71, the video capture device acquires a communication request sent from the terminal.

In step S72, the video capture device extracts a terminal identifier from the communication request.

In step S73, the video capture device determines the number of terminals currently connected to the video capture device according to the terminal identifier.

In step S74, the video capture device transmits status information thereof to the network device periodically.

In step S75, the network device receives the status information transmitted from the video capture device.

In step S76, the network device extracts the number of terminals currently connected to the video capture device from the status information.

In step S77, the network device receives a query request sent from a predetermined terminal if the number of terminals currently connected to the video capture device exceeds a second preset threshold.

In step S78, the network device queries status information of the video capture device associated with the predetermined terminal according to the query request.

In step S79, the network device transmits the status information to the predetermined terminal.

In an embodiment, the status information in step S74 described above may include information related to terminals connected to the video capture device.

The information related to terminals connected to the video capture device may include at least one of:
an identifier of the terminal, and a connection status parameter of the video capture device.

The connection status parameter may not only include the number of terminals currently connected to the video capture device described above, but also may include the number of terminals connected to the video capture device during a preset time interval. In that case, the step S73 may include determining the number of terminal connected to the video capture device during the preset time interval according to the terminal identifier.

Moreover, in an embodiment, the step S74 may also be implemented in a following manner:
transmitting the status information to the network device if the number of terminals currently connected to the video capture device exceeds a first preset threshold.

Otherwise, it may be implemented as following:
generating a heartbeat packet of the video capture device according to the status information; and
transmitting the heartbeat packet to the network device.

In an implementation of step S77, if the number of terminals currently connected to the video capture device exceeds a second preset threshold, steps S77-S79 may also be implemented as following:
transmitting the status information to the network device periodically.

Take an example in which the video capture device is a camera accessing a smart router and the network device is the smart router. When a user needs to check scenes shoot by the camera, a communication request may be sent to the camera via a terminal such as a mobile phone, a tablet computer and the like. Upon acquisition of the communication request sent from the terminal, the camera may extract a terminal identifier from the communication request and determine the number of terminal currently connected to the camera. Herein, the camera may transmit status information including the number of terminals currently connected to the camera to the smart router periodically; or may transmit the status information of the camera to the smart router if the number of terminals currently connected to the camera exceeds a first preset threshold; or may transmit the status information of the camera to the smart router in a fixed frequency by providing a heartbeat mechanism and generating heartbeat packets of the camera according to the status information thereof.

Upon reception of the status information sent from the camera, the smart router may extracts the number of terminals currently connected to the camera from the status information, and transmit the status information to a predetermined terminal (e.g. a mobile phone or a tablet computer owned by an administer of the camera), which was authorized in advance to check the status information of the camera, if the number of terminals currently connected to the camera exceeds a preset threshold. The transmission of the status information to the terminal authorized to check status of the camera may include two following examples.

### Example I

A query request to query status information of the camera is sent initially by a terminal holder authorized in advance to check the status information of the camera.

The smart router receives the query request sent from the terminal, queries the status information of the camera according to the query request, and transmits the queried status information to the terminal authorized in advance to check the status information of the camera.

### Example II

The status information is transmitted periodically to the terminal authorized in advance to check the status information of the camera if the number of terminals connected to the video capture device exceeds a preset threshold.

Following advantageous effects may be achieved by the technical solution provided in the embodiment according to the present disclosure. The terminal is able to be connected directly to the video capture device by sending a communication request thereto with easy and convenient operations. The predetermined terminal is able to query status information of the video capture device by sending a query request. Moreover, the number of terminals connected to the video capture device can be pushed actively to the predetermined terminal if it exceeds a preset threshold. Accordingly, the number of terminals connected to the video capture device can be obtained in real-time, so as to prevent the video capture device from being illegally accessed and ensure security of the video capture device.

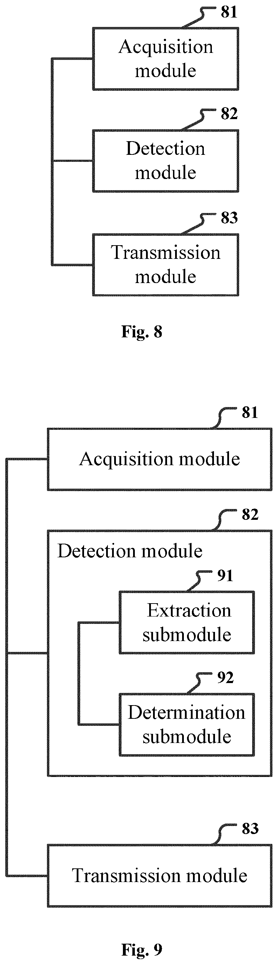

Fig. 8 is a block diagram illustrating an apparatus for querying information according to an exemplary embodiment. As shown in Fig. 8, the method for querying information may be applied in a video capture device, and includes following steps S11-S13.

Fig. 8 is a block diagram illustrating an apparatus for querying information according to an exemplary embodiment. As shown in Fig. 8, the apparatus for querying information may be applied in a video capture device, and includes an acquisition module82, a detection module 82 and a transmission module 83.

The acquisition module 81 is configured to acquire a communication request sent from a terminal.

The detection module 82 is configured to detect, based on the communication request, terminals connected to the video capture device.

The transmission module 83 is configured to transmit status information of the video capture device to a network device, the status information including information related to the terminals connected to the video capture device.

In an embodiment, as shown in Fig. 9, the detection module 82 includes an extraction submodule 91 and a determination submodule 92.

The extraction submodule 91 is configured to extract a terminal identifier from the communication request.

The determination submodule 92 is configured to determine at least one connection status parameter of the video capture device selected from a group including:
number of terminals currently connected to the video capture device, and number of terminals connected to the video capture device during a preset time interval.

In an embodiment, the transmission module 83 is configured to transmit the status information of the video capture device to the network device periodically;
or
configured to transmit the status information of the video capture device to the network device if the connection status parameter exceeds a first preset threshold.

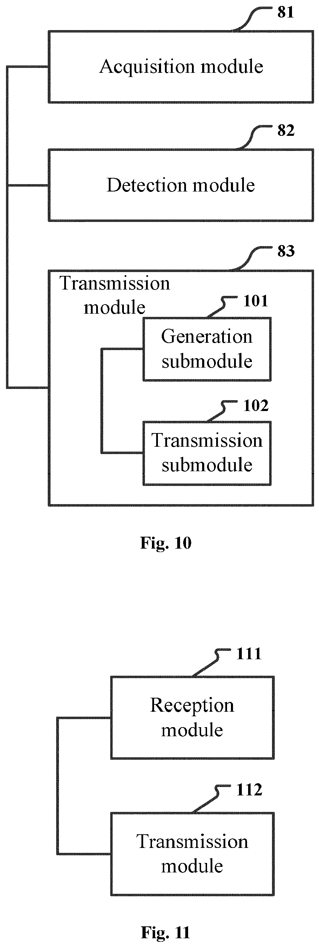

In an embodiment, as shown in Fig. 10, the transmission module 83 includes a generation submodule 101 and a transmission submodule 102.

The generation submodule 101 is configured to generate a heartbeat packet of the video capture device according to the status information.

The transmission submodule 102 is configured to transmit the heartbeat packet to the network device.

Fig. 11 is a block diagram illustrating an apparatus for querying information according to an exemplary embodiment. As shown in Fig. 11, the apparatus for querying information may be applied at a network device, and includes a reception module 111 and a transmission module 112.

The reception module 111 is configured to receive status information sent from a video capture device, the status information including information related to terminals connected to the video capture device.

The transmission module 112 is configured to transmit the status information to a predetermined terminal, wherein the predetermined terminal is a terminal associated with the video capture device.

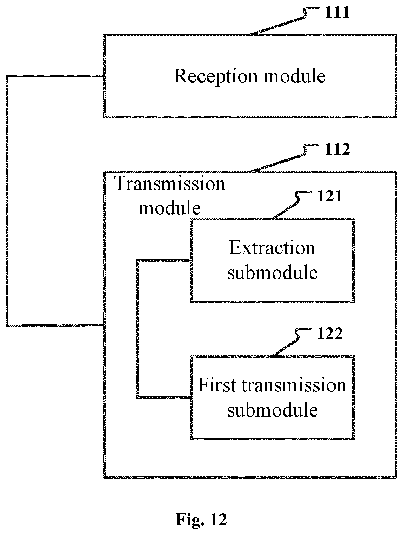

In an embodiment, as shown in Fig. 12, the transmission module 112 includes an extraction submodule 121 and a first transmission submodule 122.

The extraction submodule 121 is configured to extract a connection status parameter of the video capture device from the status information.

The first transmission submodule 122 is configured to transmit the status information to the predetermined terminal if the connection status parameter exceeds a second preset threshold.

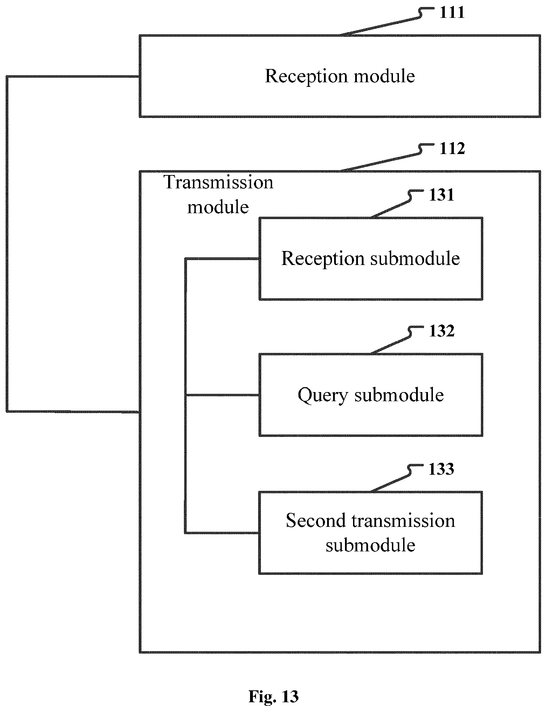

In an embodiment, as shown in Fig. 13, the transmission module 112 includes a reception submodule 131, a query submodule 132 and a second transmission submodule 133.

The reception submodule 131 is configured to receive a query request sent from the predetermined terminal.

The query submodule 132 is configured to query status information of a video capture device associated with the predetermined terminal according to the query request.

The second transmission submodule 133 is configured to transmit the status information to the predetermined terminal.

In an embodiment, the transmission module is configured to transmit the status information to the predetermined terminal periodically.

The present disclosure further provides an apparatus for querying information, including:
a processor; and
a memory for storing instructions executable by the processor,
wherein the processor is configured to:
   acquire a communication request sent from a terminal;
   detect, based on the communication request, terminals connected to the video capture device according to the communication request; and
   transmit status information of the video capture device to a network device, the status information including information related to the terminals connected to the video capture device.

The present disclosure further provides an apparatus for querying information, including:
a processor; and
a memory for storing instructions executable by the processor,
wherein the processor is configured to:
   receive status information sent from a video capture device, the status information including information related to terminals connected to the video capture device; and
   transmit the status information to a predetermined terminal, wherein the predetermined terminal is a terminal associated with the video capture device.

With respect to the apparatus in the above embodiments, the specific manners for performing operations for respective modules therein have been described in detail in the embodiments regarding the method, which will not be elaborated herein.

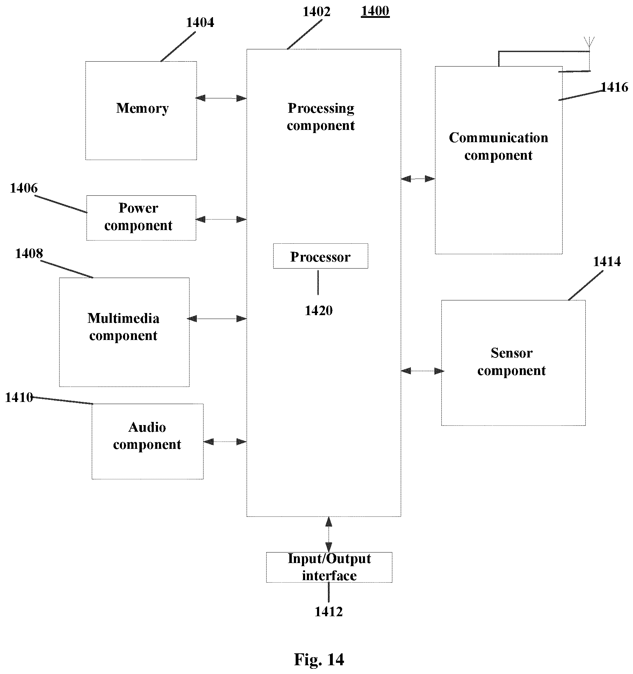

Fig. 14 is a block diagram illustrating an apparatus 1400 used for querying information according to an exemplary embodiment. The apparatus may be applicable in a terminal device associated with the video capture device according to the present disclosure. The apparatus 1400 may be anyone selected from a group including a mobile phone, a computer, a digital broadcast terminal device, a messaging device, a gaming console, a tablet, a medical device, an exercise equipment, a personal digital assistant (PDA), and the like.

The apparatus 1400 may include one or more of the following components: a processing component 1402, a memory 1404, a power component 1406, a multimedia component 1408, an audio component 1410, an input/output (I/O) interface 1412, a sensor component 1414, and a communication component 1416.

The processing component 1402 generally controls overall operations of the apparatus 1400, such as operations associated with display, telephone calls, data communications, camera operations, and recording operations. The processing component 1402 may include one or more processors 1420 to execute instructions to perform all or part of the steps in the above described methods. Moreover, the processing component 1402 may include one or more modules which facilitate interaction between the processing component 1402 and other components. For instance, the processing component 1402 may include a multimedia module to facilitate the interaction between the multimedia component 1408 and the processing component 1402.

The memory 1404 is configured to store various types of data to support the operation of the apparatus 1400. Examples of such data include instructions for any application or method operated on the apparatus 1400, contact data, phonebook data, messages, pictures, videos, etc. The memory 1404 may be implemented using any type of volatile or non-volatile memory apparatus or combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or an optical disk.

The power component 1406 provides power to various components of the apparatus 1400. The power component 1406 may include a power management system, one or more power sources, and other components associated with the generation, management, and distribution of power in the apparatus 1400.

The multimedia component 1408 includes a screen providing an output interface between the apparatus 1400 and the user. In some embodiments, the screen may include a liquid crystal display (LCD) and a touch panel (TP). If the screen includes the touch panel, the screen may be implemented as a touch screen to receive input signal from the user. The touch panel includes one or more touch sensors to sense touches, slips, and gestures on the touch panel. The touch sensors may not only sense a boundary of a touch or slip action, but also sense a period of time and a pressure associated with the touch or slip action. In some embodiments, the multimedia component 1408 includes a front camera and/or a rear camera. The front camera and/or the rear camera may receive an external multimedia datum while the apparatus 1400 is in an operation mode, such as a photographing mode or a video mode. Each of the front camera and the rear camera may be a fixed optical lens system or have focus and optical zoom capability.

The audio component 1410 is configured to output and/or input audio signal. For example, the audio component 1410 includes a microphone (MIC) configured to receive external audio signal when the apparatus 1400 is in an operation mode, such as a call mode, a recording mode, and a voice identification mode. The received audio signal may be further stored in the memory 1404 or transmitted via the communication component 1416. In some embodiments, the audio component 1410 further includes a speaker to output audio signal.

The I/O interface 1412 provides an interface between the processing component 1402 and peripheral interface modules, such as a keyboard, a click wheel, a button, or the like. The button may include, but not limited to, a home button, a volume button, a starting button, or a locking button.

The sensor component 1414 includes one or more sensors to provide status assessments of various aspects of the apparatus 1400. For instance, the sensor component 1414 may detect an open/closed status of the apparatus 1400, relative positioning of components, e.g., the display and the keyboard, of the apparatus 1400, a change in position of the apparatus 1400 or a component of the apparatus 1400, a presence or absence of user contact with the apparatus 1400, an orientation or an acceleration/deceleration of the apparatus 1400, and a change in temperature of the apparatus 1400. The sensor component 1414 may include a proximity sensor configured to detect the presence of nearby objects without any physical contact. The sensor component 1414 may also include a light sensor, such as a CMOS or CCD image sensor, for use in imaging applications. In some embodiments, the sensor component 1414 may also include an accelerometer sensor, a gyroscope sensor, a magnetic sensor, a pressure sensor, or a temperature sensor.

The communication component 1416 is configured to facilitate communication, wired or wirelessly, between the apparatus 1400 and other apparatuses. The apparatus 1400 may access a wireless network based on a communication standard, such as WIFI, 2G, or 3G, or a combination thereof. In one exemplary embodiment, the communication component 1416 receives broadcast signal or broadcast associated information from an external broadcast management system via a broadcast channel. In one exemplary embodiment, the communication component 1416 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the apparatus 1400 may be implemented with one or more application specific integrated circuits (ASICs), digital signal processors (DSPs), digital signal processing apparatuses (DSPDs), programmable logic apparatuses (PLDs), field programmable gate arrays (FPGAs), controllers, micro-controllers, microprocessors, or other electronic components, for performing the above method.

In exemplary embodiments, there is also provided a non-transitory computer readable storage medium including instructions, such as instructions included in the memory 1404, executable by the processor 1420 in the apparatus 1400, for performing the above method. For example, the non-transitory computer-readable storage medium may be a ROM, a random access memory (RAM), a CD-ROM, a magnetic tape, a floppy disc, an optical data storage apparatus, or the like.

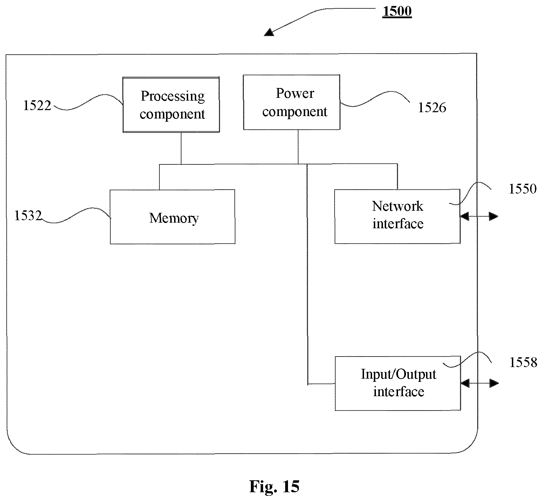

Fig. 15 is a block diagram illustrating an apparatus used for querying information according to an exemplary embodiment. For example, the apparatus 1500 may be provided at a network device. The apparatus 1500 includes: a processing component 1522 which may further include one or more processors, and memory resource represented by a memory 1532 which is configured to store instructions, such as application programs, executable by the processing component 1522. The application programs may include one or more modules each corresponding to a set of instructions. Furthermore, the processing module 1522 is configured to execute the instructions so as to perform the method described above.

The apparatus 1500 may also include a power component 1526 configured to perform power management of the apparatus 1500, a wired or wireless network interface 1550 configured to connect the apparatus 1500 with a network, and an Input/Output (I/O) interface 1558. Then apparatus 1500 may be operated based on an operating system stored on the memory 1532, such as Windows Server™, Mac OS X™, Unix™, Linux™, FreeBSD™ or the like.

A non-transitory computer-readable storage medium includes instructions, executable by a processor of the apparatus 1400, to enable the apparatus 1400 to perform a method for querying information described above. The method includes:
acquiring a communication request sent from a terminal;
detecting terminals connected to the video capture device according to the communication request; and
transmitting status information of the video capture device to a network device, the status information including information related to the terminals connected to the video capture device.

In an embodiment, the detecting terminals connected to the video capture device according to the communication request includes:
extracting a terminal identifier from the communication request; and
determining at least one connection status parameter of the video capture device selected from a group including:
   number of terminals currently connected to the video capture device, and number of terminals connected to the video capture device during a preset time interval.

In an embodiment, the information related to the terminals connected to the video capture device includes at least one selected from a group including:
terminal identifiers of the terminals, and the connection status parameter of the video capture device.

In an embodiment, the transmitting status information of the video capture device to a network device includes:
transmitting the status information of the video capture device to the network device periodically;
or
transmitting the status information of the video capture device to the network device if the connection status parameter exceeds a first preset threshold.

In an embodiment, the transmitting status information of the video capture device to a network device includes:
generating a heartbeat packet of the video capture device according to the status information; and
transmitting the heartbeat packet to the network device.

A non-transitory computer-readable storage medium includes instructions, executable by a processor of a smart mobile device, to enable the smart mobile device to perform a method for a smart device to access a router. The method includes:
transmitting an identifier of the smart device and an SSID of the router to a server when the smart device is to access the router, the server being configured to judge whether the router currently accessed by the smart device is an access-barred router to obtain a judgment result;
receiving from the server a corresponding instruction generated according to the judgment result; and
performing a corresponding process according to the instruction.

A non-transitory computer-readable storage medium includes instructions, executable by a processor of the apparatus 1500, to enable the apparatus 1500 to perform a method for querying information described above. The method includes:
receiving status information sent from a video capture device, the status information including information related to terminals connected to the video capture device; and
transmitting the status information to a predetermined terminal, wherein the predetermined terminal is a terminal associated with the video capture device.

In an embodiment, the transmitting the status information to a predetermined terminal includes:
extracting a connection status parameter of the video capture device from the status information; and
transmitting the status information to the predetermined terminal if the connection status parameter exceeds a second preset threshold.

In an embodiment, the transmitting the status information to a predetermined terminal includes:
receiving a query request sent from the predetermined terminal;
querying status information of a video capture device associated with the predetermined terminal according to the query request; and
transmitting the status information to the predetermined terminal.

In an embodiment, the transmitting the status information to a predetermined terminal includes:
transmitting the status information to the predetermined terminal periodically.

Other embodiments of the invention will be apparent to those skilled in the art from consideration of the specification and practice of the invention disclosed herein. This application is intended to cover any variations, uses, or adaptations of the invention following the general principles thereof and including such departures from the present disclosure as come within known or customary practice in the art. It is intended that the specification and examples be considered as exemplary only, with a true scope and spirit of the invention being indicated by the following claims.

It will be appreciated that the present invention is not limited to the exact construction that has been described above and illustrated in the accompanying drawings, and that various modifications and changes can be made without departing from the scope thereof.

It is intended that the scope of the invention only be limited by the appended claims.

## Claims

1. A method for querying information, applied in an interactive system including a video capture device and a network device, **characterized in** comprising:
acquiring (S71), by the video capture device, a communication request sent from a terminal;
extracting (S72), by the video capture device, a terminal identifier from the communication req uest;
determining (S73), by the video capture device, a number of terminals currently connected to the video capture device according to the terminal identifier;
transmitting (S74), by the video capture device, status information of the video capture device to the network device;
receiving (S75), by the network device, the status information transmitted from the video capture device;
extracting (S76), by the network device, the number of terminals currently connected to the video capture device from the status information;
receiving (S77), by the network device, a query request sent from a predetermined terminal if the number of terminals currently connected to the video capture device exceeds a first preset threshold;
querying (S78), by the network device, the status information of the video capture device associated with the predetermined terminal according to the query request; and
transmitting (S79), by the network device, the status information to the predetermined terminal.

2. The method of claim 1, wherein the status information includes information related to terminals connected to the video capture device.

3. The method of claim 2, wherein the information related to terminals connected to the video capture device includes at least one of an identifier of the terminal, and a connection status parameter of the video capture device.

4. The method of claim 3, wherein the connection status parameter of the video capture device comprises the number of terminals currently connected to the video capture device.

5. The method of claim 4, wherein the connection status parameter of the video capture device further comprises the number of terminals connected to the video capture device during a preset time interval,
wherein said determining (S73), by the video capture device, a number of terminals currently connected to the video capture device according to the terminal identifier comprises:
determining the number of terminal connected to the video capture device during the preset time interval according to the terminal identifier.

6. The method of any one of claims 1 to 5, wherein said transmitting (S74), by the video capture device, status information of the video capture device to the network device comprises:
transmitting, by the video capture device, the status information of the video capture device to the network device periodically; or
transmitting the status information to the network device if the number of terminals currently connected to the video capture device exceeds a second preset threshold.

7. The method of any one of claims 1 to 6, wherein transmitting (S74), by the video capture device, status information of the video capture device to the network device comprises:
generating, by the video capture device, a heartbeat packet of the video capture device according to the status information; and
transmitting, by the video capture device, the heartbeat packet to the network device.

8. The method of any one of claims 1 to 7, wherein transmitting (S79), by the network device, the status information to the predetermined terminal comprises:
transmitting the status information to the predetermined terminal periodically.

9. An interactive system, comprises a video capture device and a network device, **characterized in that**:
the video capture device is configured to acquire a communication request sent from a terminal; extract a terminal identifier from the communication request; determine a number of terminals currently connected to the video capture device according to the terminal identifier; transmit status information of the video capture device to the network device; and
the network device is configured to receive the status information transmitted from the video capture device; extract the number of terminals currently connected to the video capture device from the status information; receive a query request sent from a predetermined terminal if the number of terminals currently connected to the video capture device exceeds a first preset threshold; query the status information of the video capture device associated with the predetermined terminal according to the query request; and transmit the status information to the predetermined terminal.

10. The system of claim 9, wherein the status information includes information related to terminals connected to the video capture device.

11. The system of claim 10, wherein the information related to terminals connected to the video capture device includes at least one of an identifier of the terminal, and a connection status parameter of the video capture device.

12. The system of claim 11, wherein the connection status parameter of the video capture device comprises the number of terminals currently connected to the video capture device.

13. The system of any one of claims 9 to 12, wherein the video capture device is configured to:
transmit the status information of the video capture device to the network device periodically; or
transmit the status information to the network device if the number of terminals currently connected to the video capture device exceeds a second preset threshold.

14. The system of any one of claims 9 to 13, wherein the video capture device is configured to:
generate a heartbeat packet of the video capture device according to the status information; and
transmit the heartbeat packet to the network device.

15. The system of any one of claims 9 to 14, wherein the network device is configured to:
transmit the status information to the predetermined terminal periodically.
